# EUROPÄISCHE PATENTSCHRIFT

(11) **EP 3 420 867 B1**
(45) Veröffentlichungstag und Bekanntmachung des Hinweises auf die Patenterteilung: **18.09.2024**
(21) Anmeldenummer: 18179547.7
(22) Anmeldetag: 25.06.2018
(51) Int. Cl.: A47J 43/07, A47J 44/00, A47J 27/00, A47J 27/13

(54) **AUFSATZBEHÄLTER FÜR EINE KÜCHENMASCHINE SOWIE VERFAHREN ZUM BETRIEB EINER KÜCHENMASCHINE**
CONTAINER FOR A KITCHEN APPLIANCE AND METHOD FOR OPERATING SAME
RÉCIPIENT DÉVERSOIR POUR UN ROBOT DE CUISINE ET PROCÉDÉ DE FONCTIONNEMENT D'UN ROBOT DE CUISINE

(30) Priorität: 28.06.2017 DE 102017114409
(43) Veröffentlichungstag der Anmeldung: 02.01.2019
(73) Patentinhaber: Vorwerk & Co. Interholding GmbH, 42275 Wuppertal (DE)
(72) Erfinder: Frielinghaus, Robert, 44799 Bochum (DE)
(74) Vertreter: Müller, Enno

(56) Entgegenhaltungen:
- EP-A1- 3 153 080
- WO-A2-2014/201509
- US-A1- 2016 324 359

## Beschreibung

### Gebiet der Technik

Die Erfindung betrifft eine Küchenmaschine mit einem Zubereitungsgefäß, welches eine obere Öffnung aufweist, und mit einer Mehrzahl von Aufsatzbehältern, die derart auf das Zubereitungsgefäß aufgesetzt sind, dass eine bodenseitige Öffnung der Aufsatzbehälter über der oberen Öffnung des Zubereitungsgefäßes angeordnet ist, wobei der Aufsatzbehälter in dem Aufsatzbehälter selbst ausgebildete und relativ zu dem Aufsatzbehälter im Übrigen bewegbare Verschlussmittel aufweist, die in einer Geschlossenstellung die bodenseitige Öffnung verschließen und zum Einfüllen von in dem Aufsatzbehälter bevorrateten Zutaten in das Zubereitungsgefäß in eine Offenstellung bringbar sind, wobei ein unterster Aufsatzbehälter auf dem Zubereitungsgefäß oder einem Deckel des Zubereitungsgefäßes aufliegt und auf dem untersten Aufsatzbehälter zumindest ein oberer Aufsatzbehälter angeordnet ist, wobei eine Oberseite des Aufsatzbehälters ein erstes Schnittstellenelement und eine Unterseite des Aufsatzbehälters ein zweites Schnittstellenelement aufweist, die derart ausgebildet und angeordnet sind, dass die beiden Schnittstellenelemente zweier übereinander angeordneter Aufsatzbehälter miteinander verbunden sind

Die Erfindung betrifft darüber hinaus ein Verfahren zum Betrieb einer Küchenmaschine.

### Stand der Technik

Eine Küchenmaschine mit einem Aufsatzbehälter wird in der DE 10 2012100 940 A1 beschrieben. Ein Gargefäß, welches zur Zubereitung von Speisen dient und somit ein Zubereitungsgefäß ausbildet, besitzt eine obere Öffnung, durch die Dampf in einen über der oberen Öffnung angeordneten Aufsatzbehälter treten kann, um dadurch im Aufsatzbehälter bevorratete Speisen dampfzugaren.

Aus der US 2006/0263501 A1 ist ein Aufsatzbehälter für eine Küchenmaschine bekannt, der mit nur einem teilweise durchgehenden Boden ausgebildet ist und bzgl. der ständig im Boden gegebenen Öffnung mittels eines Drehantriebs in eine Übereinanderanordnung zu dem Zubereitungsgefäß versetzbar ist, sodass in dem Aufsatzbehälter befindliches Zugabegut in das Zubereitungsgefäß hineinfallen kann.

Die Veröffentlichungsschrift WO 2014/201509 A2 betrifft des Weiteren einen gattungsgemäßen Aufsatzbehälter zum Aufsetzen auf ein Zubereitungsgefäß, welcher relativ zu dem Aufsatzbehälter bewegbare Verschlussmittel aufweist, die von einer Geschlossenstellung in eine Offenstellung bringbar sind, um eine bodenseitige Öffnung des Aufsatzbehälters zu verschließen beziehungsweise zu öffnen und somit das Einfüllen von bevorrateten Zutaten in das Zubereitungsgefäß ermöglichen.

Des Weiteren offenbart die US 2016/324359 A1 eine Küchenmaschine mit einer Mehrzahl von Aufsatzbehältern, die nebeneinander auf einem Zubereitungsgefäß angeordnet sind.

### Zusammenfassung der Erfindung

Im Hinblick auf den vorbeschriebenen Stand der Technik wird eine technische Problematik der Erfindung darin gesehen, die Küchenmaschine handhabungstechnisch weiter zu verbessern.

Die Erfindung ist in dem beigefügten Anspruchssatz beschrieben, wobei die Ansprüche 1 bis 8 eine Küchenmaschine mit einem Zubereitungsgefäß und mit einer Mehrzahl von Aufsatzbehältern betreffen, und wobei der Anspruch 9 ein Verfahren zum Betrieb einer Küchenmaschine betrifft.

Der Aufsatzbehälter kann einen kreisförmigen Grundriss aufweisen. Er besitzt insbesondere eine zylinderförmige Seitenwand. Die Seitenwand kann eine Höhlung aufweise. Die Seitenwand kann mittels Temperiermitteln temperiert werden. Temperiermittel sind insbesondere in der Höhlung angeordnet. Die Temperiermittel können Kühlelemente sein, die die im Aufsatzbehälter bevorrateten Zutaten kühlen. Es sind aber auch Heizmittel denkbar. Alternativ oder zusätzlich kann der Aufsatzbehälter ein Anzeigeelement zur optisch erfassbaren Darstellung eines Betriebszustandes des Aufsatzbehälters aufweisen. Das Anzeigeelement kann beispielsweise an einer Außenseite einer Seitenwand des Aufsatzbehälters angeordnet sein.

In dem Aufsatzbehälter selbst sind ausgebildete und relativ zu dem Aufsatzbehälter im Übrigen bewegbare Verschlussmittel vorgesehen, die in einer Geschlossenstellung die bodenseitige Öffnung verschließen und zum Einfüllen von dem Aufsatzbehälter bevorrateten Zutaten in das Zubereitungsgefäß in eine Offenstellung bringbar sind. In der Geschlossenstellung verschließen die Verschlussmittel die bodenseitige Öffnung. In der Offenstellung ist die bodenseitige Öffnung offen. Der Aufsatzbehälter ist somit in der Lage, Zutaten für eine Speisezubereitung zu bevorraten, die zu einem vorgegebenen Zeitpunkt während des Zubereitungsvorganges in das Zubereitungsgefäß gebracht werden. Hierzu sind die Verschlussmittel von der Geschlossenstellung in die Offenstellung zu bringen, so dass die Zutaten, insbesondere schwerkraftbeaufschlagt, durch die bodenseitige Öffnung, die dann geöffnet ist, im Boden des Aufsatzbehälters, und durch die obere Öffnung des Zubereitungsgefäßes in das Zubereitungsgefäß fallen können.

Die bodenseitige Öffnung kann einen ausreichend großen Querschnitt aufweisen, so dass der Aufsatzbehälter entleert wird. Darüber hinaus kann der Boden des Aufsatzbehälters eine gewisse Trichterform besitzen, so dass auch nahe dem Rand des Bodens liegende Zutaten durch die geöffnete Bodenöffnung des Aufsatzbehälters hindurch fallen.

In einer Weiterbildung der Erfindung ist vorgesehen, dass die Verschlussmittel elektromechanisch betätigbar sind. Hierzu sind insbesondere elektromechanische Antriebsmittel vorgesehen, um die Verschlussmittel von der Geschlossenstellung in die Offenstellung zu bringen. Diese Weiterbildung ermöglicht das automatische Einfüllen der Zutaten vom Aufsatzbehälter in das Zubereitungsgefäß.

Es ist insbesondere vorgesehen, dass das Antriebselement von einer Steuereinrichtung, die einen Garprozess steuert, Schaltsignale erhält, die die Steuereinrichtung veranlasst, das Antriebselement zu betätigen, um die Verschlussmittel von der Geschlossenstellung in die Offenstellung zu verlagern.

Bei den Verschlussmitteln kann es sich um in einer Bodenebene verlagerbare Schieber handeln. Diese können in der Art einer Irisblende angeordnet sein.

Es ist eine Energieversorgung vorgesehen, mit der der Aufsatzbehälter mit elektrischer Energie versorgt werden kann. Hierzu kann ein Akkumulator vorgesehen sein, der bspw. in einer Gehäusehöhlung angeordnet ist. Die Energieversorgung kann aber auch über ein Versorgungskabel erfolgen, in welches von der Küchenmaschine elektrische Energie eingespeist wird.

Die Steuereinrichtung kann örtlich der Küchenmaschine zugeordnet sein. Es handelt sich bevorzugt um eine programmgesteuerte Steuereinrichtung. Die Steuereinrichtung ist in der Lage, Steuersignale zu erzeugen, die über eine Signalverbindung dem Aufsatzbehälter zugeführt werden. Dies kann drahtlos erfolgen oder kabelgebunden.

Es kann ein unterster Aufsatzbehälter vorgesehen sein, der unmittelbar auf dem Zubereitungsgefäß aufgesetzt ist. Ggf. kann der unterste Aufsatzbehälter auch auf einem Deckel des Zubereitungsgefäßes aufgesetzt werden, welcher Deckel eine Öffnung aufweist, die unterhalb der bodenseitigen Öffnung des Aufsatzbehälters angeordnet ist.

Es ist aber auch vorgesehen, dass der unterste Aufsatzbehälter unmittelbar auf einem oberen Rand der oberen Öffnung des Zubereitungsgefäßes aufliegt und gewissermaßen den Deckel des Zubereitungsgefäßes ausbildet.

Auf dem untersten Aufsatzbehälter ist zumindest ein oberer Aufsatzbehälter oder sind mehrere übereinandergestapelte weitere Aufsatzbehälter angeordnet. In einer derartigen Anordnung können in den einzelnen Aufsatzbehältern unterschiedliche Zutaten bevorratet sein, die nacheinander bei der Speisezubereitung jeweils zu einer bestimmten Zeit in das Zubereitungsgefäß gebracht werden.

Die Aufsatzbehälter sind im Wesentlichen baugleich, wobei vorgesehen sein kann, dass nur der unterste Aufsatzbehälter ein Kabel mit einem Stecker aufweist, welcher in eine Steckeröffnung der Küchenmaschine eingesteckt ist, um den Aufsatzbehälter mit Energie zu versorgen und Steuersignale zu übertragen.

Der obere Rand des Aufsatzbehälters weist ein Schnittstellenelement auf, das mit einem Gegenschnittstellenelement zusammenwirken kann, welches am unteren Rand eines oberen Aufsatzbehälters angeordnet ist. Über die miteinander gekoppelten Schnittstellenelemente können Signale und/oder elektrische Energie übertragen werden.

Alternativ zur drahtgebundenen Signalübertragung ist aber auch eine drahtlose Signalübertragung vorgesehen. Dies kann bspw. über das Bluetooth-Protokoll erfolgen. Bei einer Kabelverbindung kann der Stecker bzw. können die Schnittstellenelemente gemäß dem USB-Standard ausgebildet sein.

Ferner kann ein Deckel vorgesehen sein, mit dem eine obere Öffnung des Aufsatzbehälters verschlossen werden kann. Darüber hinaus können mechanische Verbindungsmittel vorgesehen sein, mit denen übereinander gestapelte Aufsatzbehälter mechanisch miteinander verbunden sein können. Die mechanischen Verbindungsmittel können Schnapphaken ausbilden, die in Hakenausnehmungen eingreifen können.

Mit dem erfindungsgemäßen Verfahren ist die automatische Zubereitung von Speisen möglich, bei der in zeitlicher Aufeinanderfolge nacheinander zu definierten Zeitpunkten verschiedene Zutaten in das Zubereitungsgefäß gebracht werden. Eine erste Zutat wird bspw. unmittelbar zu Beginn des Garvorgangs in das Zubereitungsgefäß gebracht und dort gegart, wozu eine Heizeinrichtung des Zubereitungsgefäßes aber auch ein Rührwerk verwendet werden kann, das am Boden des Zubereitungsgefäßes angeordnet ist.

Es sind ein oder mehrere Zubereitungsgefäße vorgesehen, die jeweils mit einer Zutat befüllt werden und die mit sich in Geschlossenstellung befindlichen Verschlussmitteln auf das Zubereitungsgefäß aufgesetzt bzw. übereinandergestapelt werden. Der Garprozess beginnt mit einer thermischen und/oder mechanischen Behandlung der zu Beginn im Zubereitungsgefäß bevorrateten Zutat. Nach einer ersten Zeit nach Beginn des Garvorgangs werden von der Steuereinrichtung die Verschlussmittel eines zuunterst angeordneten Aufsatzbehälters geöffnet, so dass die darin enthaltene Zutat in das Zubereitungsgefäß fallen kann. Zu einem zweiten Zeitpunkt nach Beginn des Garvorgangs werden die Verschlussmittel eines oberhalb des untersten Aufsatzbehälters angeordneten Aufsatzbehälters geöffnet, so dass die darin enthaltene Zutat durch den untersten Aufsatzbehälter und dessen geöffneter Öffnung hindurch in das Zubereitungsgefäß fallen kann.

Es können weitere Aufsatzbehälter, die jeweils mit unterschiedlichen Zutaten befüllt sind, übereinander angeordnet sein, wobei die Verschlusselemente der übereinander angeordneten Aufsatzbehälter von unten nach oben nacheinander geöffnet werden.

Erfindungsgemäß werden mehrere aufeinander stapelbare Behälter auf das Gefäß der Küchenmaschine aufgesetzt. Jeder Behälter ist mit einem automatisch zu öffnenden Boden ausgestattet und ist mit einer individuellen Zutat gefüllt. Für verderbliche Lebensmittel sind die Behälter optional kühlbar. Sie verfügen über eine Stromversorgung und eine Kommunikationsschnittstelle mit der Küchenmaschine und werden von der Küchenmaschine versorgt und gesteuert.

Nacheinander öffnen die Behälter ihre Böden, um die für den Rezeptschritt vorgesehene Zutat in den Behälter der Küchenmaschine hinzuzufügen. Diese fällt durch alle darunter liegenden Behälterebenen bis in den Behälter der Küchenmaschine. Das Öffnen der Behälterböden kann automatisch erfolgen. Es ist aber auch vorgesehen, dass hierzu Bedienelemente, bspw. ein berührungsempfindliches Display, vorgesehen sind. Das Display kann auch die im Behälter enthaltene Zutat anzeigen.

Mit der erfindungsgemäßen Vorrichtung ist es möglich, einen Garprozess Stunden vor dem Zeitpunkt der Zubereitung vor zubereiten und die Küchenmaschine derart zu programmieren, dass zu eine vorgegebenen Zeitpunkt das Gericht fertig gegart ist. Als Folge der Kühlmöglichkeit der Aufsatzbehälter können darin auch leicht verderbliche Lebensmittel für längere Zeit bevorratet werden.

### Kurze Beschreibung der Zeichnungen

Ein Ausführungsbeispiel der Erfindung wird nachfolgend anhand beigefügter Zeichnungen erläutert. Es zeigen:

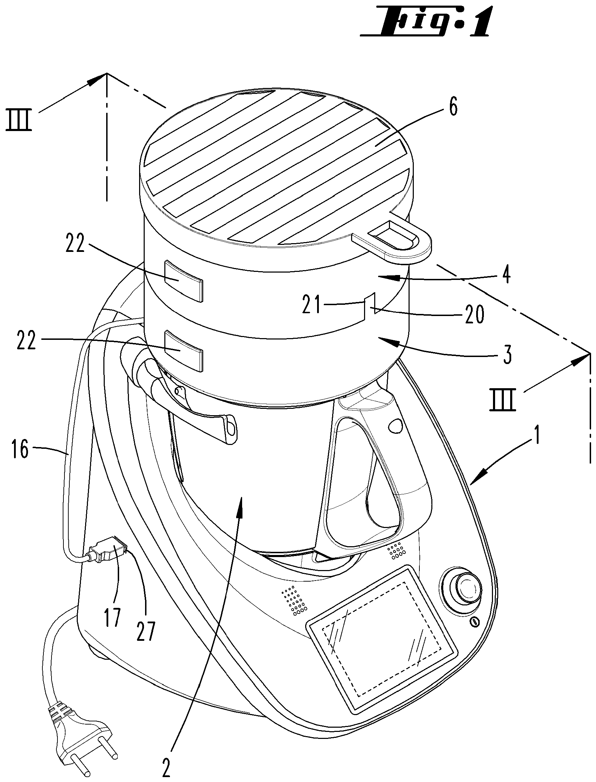

- Fig. 1: eine perspektivische Darstellung einer Küchenmaschine 1, auf deren Zubereitungsgefäß 2 zwei Aufsatzbehälter 3, 4 übereinander angeordnet sind, wobei auf dem zuoberst angeordneten Aufsatzbehälter 4 ein Deckel 6 sitzt,

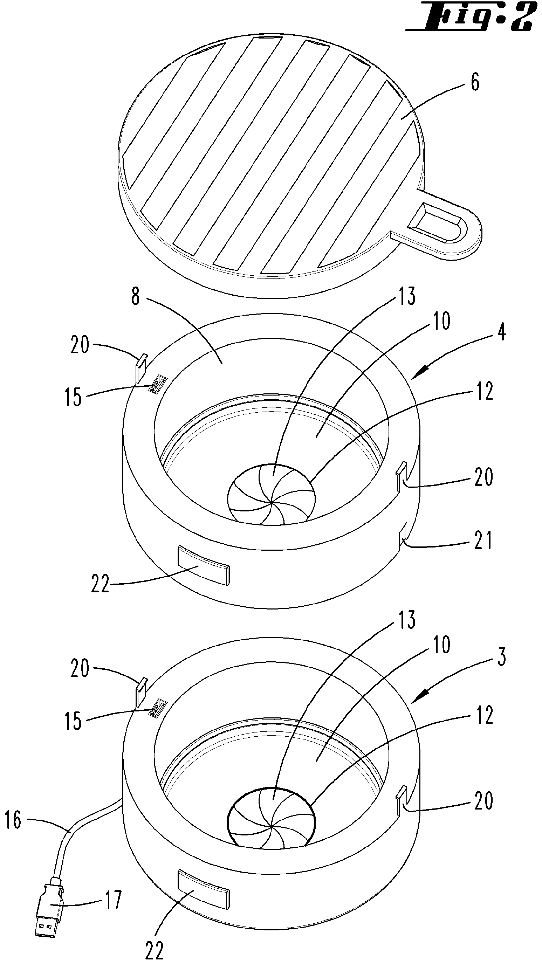

- Fig. 2: in einer perspektivischen Darstellung explosionsartig die beiden Aufsatzbehälter 3, 4 nebst Deckel 6,

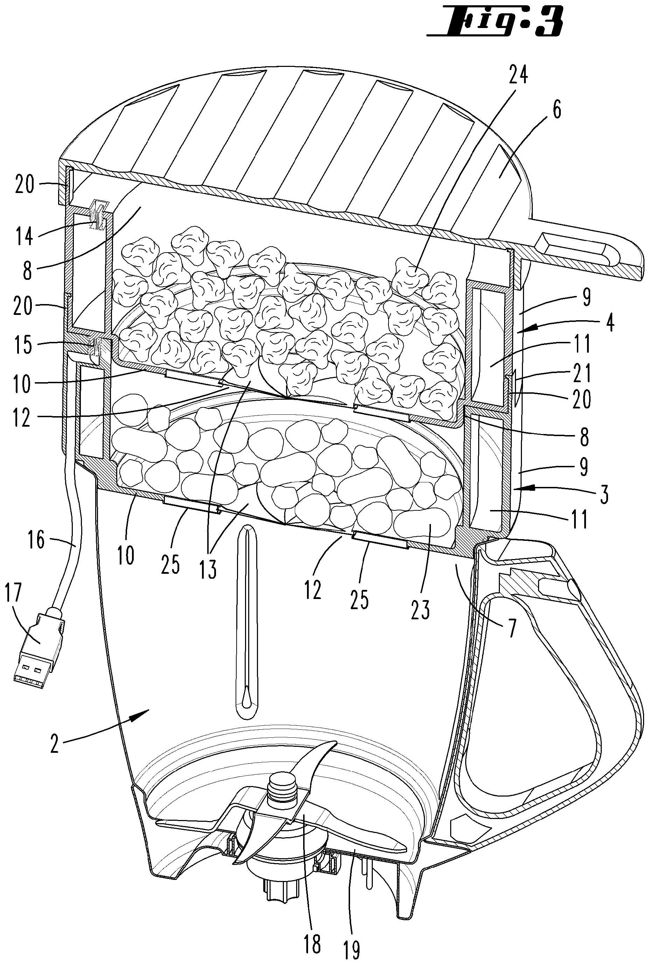

- Fig. 3: eine Schnittdarstellung der beiden auf dem Zubereitungsgefäß 2 aufgesetzten Aufsatzbehälter 3, 4, die jeweils mit einer anderen Zutat 23, 24 befüllt sind, wobei jeweils eine bodenseitige Öffnung 12 der Aufsatzbehälter 3, 4 durch Verschlussmittel 13 verschlossen ist,

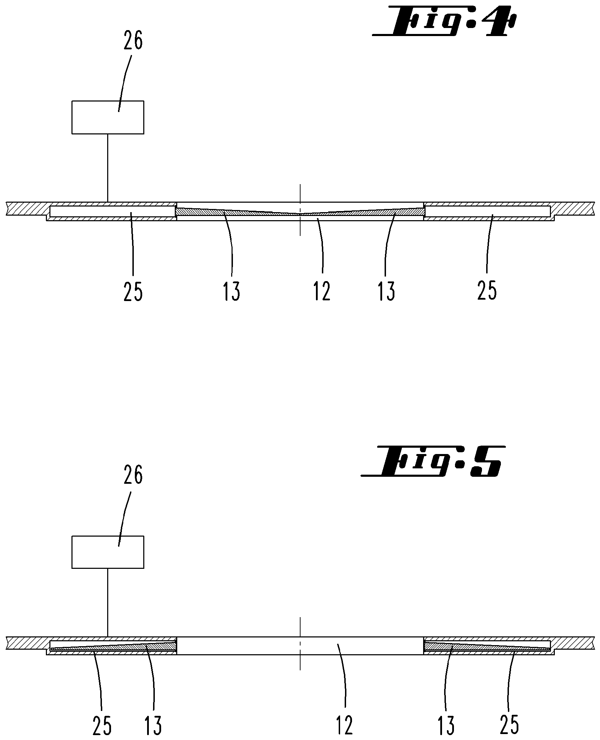

- Fig. 4: eine schematische Darstellung, bei der die Verschlussmittel 13 eine Geschlossenstellung einnehmen und dabei die bodenseitige Öffnung 12 verschließen,
- Fig. 5: eine Darstellung gemäß Figur 4, wobei sich die Verschlussmittel 13 in einer Offenstellung befinden, so dass die Bodenseitige Öffnung 12 frei ist und
- Fig. 6: eine Darstellung gemäß Figur 1, wobei insgesamt drei Aufsatzbehälter 3, 4, 5 oberhalb des Zubereitungsgefäßes 2 angeordnet sind.

### Beschreibung der Ausführungsformen

Dargestellt und beschrieben ist zunächst eine Küchenmaschine 1, die ein Gehäuse aufweist, in der sich ein elektrischer Antriebsmotor befindet, mit dem ein Rührwerk 18 drehangetrieben werden kann, wobei das Rührwerk 18 dem Boden 19 eines Zubereitungsgefäßes 2 zugeordnet ist, das eine obere Öffnung 7 aufweist.

Im Gehäuse der Küchenmaschine 1 ist darüber hinaus eine elektrische Schaltung und insbesondere eine einen Mikrokontroller aufweisende Steuereinrichtung vorgesehen, mit der eine programmierte Steuerung eines Garprozesses möglich ist.

Zur Durchführung des Garprozesses sind Heizmittel vorgesehen, um das Zubereitungsgefäß 2 mit darin enthaltenen Zutaten aufzuheizen. Es ist eine Einstecköffnung 27 vorgesehen zum Einstecken eines Steckers 17. Der Stecker 17 und die Einstecköffnung 27 können nach dem USB-Standard oder einem anderen geeigneten Standard ausgebildet sein. Durch ein mit dem Stecker 17 verbundenes Kabel 16 kann Energie zu einem Aufsatzbehälter 3 übertragen werden. Über das Kabel 16 können aber auch elektrische Signale übertragen werden. Insbesondere werden über das Kabel 16 Steuersignale übertragen.

Anstelle einer kabelgebundenen Signalübertragung ist aber auch eine drahtlose Signalübertragung denkbar.

Oberhalb der oberen Öffnung 7 des Zubereitungsgefäßes 2 befinden sich im Ausführungsbeispiel mehrere Aufsatzbehälter 3, 4, 5, wobei die Aufsatzbehälter 3, 4, 5 im Wesentlichen gleich gestaltet sind und insbesondere einen identischen Grundriss aufweisen.

Die Aufsatzbehälter 3, 4, 5 unterscheiden sich im Wesentlichen dadurch, dass der zuunterst, unmittelbar auf der oberen Öffnung 7 des Zubereitungsgefäßes aufgesetzte Aufsatzbehälter 3 das Kabel 16 aufweist, während die Aufsatzbehälter 4, 5, die auf dem untersten Aufsatzbehälter 3 aufsetzbar sind, an ihrer Unterseite ein Schnittstellenelement 15 aufweisen, das mit einem Schnittstellenelement 14 in Kontakt bringbar ist, welches auf der Oberseite des Aufsatzbehälters 3, 4, 5 angeordnet ist. Über die Schnittstellenelemente 14, 15 können elektrische Steuersignale übertragen werden. Über die Schnittstellenelemente 14, 15 kann aber auch elektrische Energie übertragen werden. Auch hier ist eine Auslegung gemäß dem USB-Standard vorgesehen. Die Schnittstellenelemente 14, 15 können elektrische Steckerelemente sein, die dem jeweiligen Standard entsprechend ausgebildet sind, wobei Kontakte in Leitverbindung treten, wenn ein Aufsatzbehälter 4, 5 auf einen darunter angeordneten Aufsatzbehälter 3, 4 aufgesetzt wird.

Die bspw. aus Kunststoff oder Metall gefertigten Aufsatzbehälter 3, 4, 5 besitzen einen Boden 10, der in den Zeichnungen im Wesentlichen eben dargestellt ist. Der Boden 10 kann aber auch leicht schräg verlaufen. Er kann insbesondere eine Trichterform aufweisen. In der Mitte des Bodens 10 befindet sich eine bodenseitige Öffnung 12, der zu dem Aufsatzbehälter 3, 4, 5 selbst gehörende Verschlussmittel 13 zugeordnet sind. Der Aufsatzbehälter 3, 4, 5 kann also mit geschlossener bodenseitiger Öffnung 12 angeordnet sein und ggf. auch transportiert oder versetzt werden. Die Verschlussmittel 13 der jeweiligen Aufsatzbehälter 3, 4, 5 selbst können dann von einer Geschlossenstellung, in der sie die bodenseitige Öffnung 12 verschließen, in eine Offenstellung gebracht werden, in der die bodenseitige Öffnung 12 offen ist. Der Aufsatzbehälter 3, 4, 5 verfügt also selbst über Verschlussmittel, die ständig in dem Aufsatzbehälter 3, 4, 5 vorhanden sind und ungeachtet seiner jeweiligen Position, auch wenn er außerhalb der Küchenmaschine bspw. gefüllt wird, an diesem vorhanden sind.

Es können Antriebselemente 25, insbesondere elektromechanische Antriebselemente, vorgesehen sein, um die Verschlussmittel 13 von der Geschlossenstellung in die Offenstellung und insbesondere auch von der Offenstellung zurück in die Geschlossenstellung zu verlagern. Die Antriebselemente 25 sind bevorzugt auch ständig Teil eines Aufsatzbehälters 3, 4, 5, werden also auch zusammen mit dem Aufsatzbehälter bei einem Transport versetzt und mitgeführt. Bei den Verschlussmitteln 13 kann es sich um Schieber handeln. Insbesondere ist vorgesehen, dass die Schieber des Verschlussmittels 13 irisblendenartig ausgebildet sind.

Das in den Zeichnungen nicht im Detail, sondern nur schematisch dargestellte Antriebselement 25 erhält Steuersignale von der ebenfalls nur schematisch dargestellten Steuereinrichtung 26, die insbesondere in der Küchenmaschine 1 vorgesehen ist. Die Steuersignale werden über das Kabel 16 bzw. die Schnittstellenelemente 14, 15 übertragen.

Der Aufsatzbehälter 3, 4, 5 besitzt eine im Wesentlichen zylinderförmige Seitenwand 9, die eine Höhlung 11 aufweist. In der Höhlung kann eine Temperiereinrichtung angeordnet sein, die insbesondere eine Heiz- und/oder Kühleinrichtung ist, mit der die im Aufsatzbehälter 3, 4, 5 bevorrateten Zutaten 23, 24 temperiert, insbesondere gekühlt oder erwärmt werden können.

Jeder Aufsatzbehälter 3, 4, 5 besitzt eine Aufnahmehöhlung, die von den Seitenwänden und dem Boden 10 begrenzt. Die Aufnahmehöhlung ist nach oben hin offen. Dort besitzt der Aufsatzbehälter 3, 4, 5 eine obere Öffnung 8.

Die obere Öffnung 8 kann durch einen darauf aufgesetzten weiteren Aufsatzbehälter 3, 4, 5 verschlossen werden. Die obere Öffnung 8 wird dann durch den Boden 10 eines weiteren Aufsatzbehälters 4, 5 verschlossen. Ein zuoberst angeordneter Aufsatzbehälter 5 kann einen Deckel tragen, der dessen obere Öffnung 8 verschließt.

Es sind mechanische Verbindungsmittel 20, 21 vorgesehen, die die übereinandergestapelten Aufsatzbehälter 3, 4, 5 aneinander fesseln. Beim Ausführungsbeispiel ist ein Verbindungselement, das den oberen Rand 8 des Aufsatzbehälters 3 überragt, als Federzunge ausgebildet mit einem Rastelement, welches in eine Rastausnehmung des Verbindungselementes 21 eingreift, welches Verbindungselement 21 an der Unterseite eines Aufsatzbehälters 4, 5 angeordnet ist.

An der Außenseite der Seitenwand des Aufsatzbehälters 3, 4, 5 kann ein Anzeigeelement 22 angeordnet sein, um den Betriebszustand des Aufsatzbehälters 3, 4, 5 anzuzeigen.

Ein Verfahren zur Zubereitung von Speisen bzw. zum Betrieb einer Küchenmaschine 1 mit Aufsatzbehältern 3, 4, 5, wie sie in den Zeichnungen dargestellt sind, kann etwa wie folgt ablaufen: Zunächst werden in das Zubereitungsgefäß 2 eine erste Zutat eingefüllt. In zumindest einen Aufsatzbehälter 3, 4, 5 wird ebenfalls eine Zutat 23, 24 eingefüllt. Der zumindest eine Aufsatzbehälter 3, 4, 5 wird dann oberhalb der oberen Öffnung 7 des Zubereitungsgefäßes 2 angeordnet. Auch hier können Verbindungsmittel vorgesehen sein, die den zu untersten Aufsatzbehälter 3 mit dem Zubereitungsgefäß 2 oder einem auf das Zubereitungsgefäß 2 aufgesetzten, in den Zeichnungen nicht dargestellten Deckel verbindet, wobei der Deckel eine Öffnung aufweist, die unterhalb der bodenseitigen Öffnung 12 des zuunterst angeordneten Aufsatzbehälters 3 angeordnet ist.

In einer Variante des Verfahrens werden mehrere Aufsatzbehälter 3, 4, 5 übereinander angeordnet, wobei in jedem Aufsatzbehälter 3, 4, 5 eine andere Zutat 23, 24 bevorratet ist. Die unteren Öffnungen 12 der Aufsatzbehälter 3, 4, 5 liegen vertikal übereinander und vertikal oberhalb der oberen Öffnung 7 des Zubereitungsgefäßes 2, so dass die Zutaten 23, 24 alleine durch die Schwerkraft ins Zubereitungsgefäß 2 fallen können.

Wenn der Garprozess begonnen wird, erfolgt zunächst eine Vorgarung der im Zubereitungsgefäß 2 bevorrateten Zutat. Es ist aber auch möglich, die dortige Zutat in einem ersten Schritt lediglich mechanisch mittels des Rührwerks 18 zu behandeln.

Nach Beendigung des ersten Garschritts wird die Öffnung 12 des unmittelbar oberhalb des Zubereitungsgefäßes 2 angeordneten Aufsatzbehälters 3 geöffnet. Hierzu erhalten die Antriebselemente 25 von der Steuereinrichtung 26 ein Steuersignal. Die im untersten Aufsatzbehälter 3 angeordneten Zutaten 23 fallen dann durch die geöffnete bodenseitige Öffnung 12 in das Zubereitungsgefäß 2, wo der Garprozess fortgesetzt wird.

Die bodenseitige Öffnung 12 der darüberliegenden Aufsatzbehälter 4, 5 bleibt verschlossen. Die bodenseitige Öffnung 12 des untersten Aufsatzbehälters 3 kann wieder verschlossen werden, kann aber auch offen bleiben.

Zu einem vorbestimmten zweiten Zeitpunkt wird die bodenseitige Öffnung 12 des Aufsatzbehälters 4 geöffnet, der oberhalb des Aufsatzbehälters 3 angeordnet ist. Sollte die bodenseitige Öffnung 12 des Aufsatzbehälters 3 wieder verschlossen worden sein, so wird auch diese Öffnung 12 geöffnet, so dass die Zutaten 24 aus dem Aufsatzbehälter 4 durch die Öffnungen 12 beider Aufsatzbehälter 3, 4 hindurch in das Zubereitungsgefäß 2 fallen können.

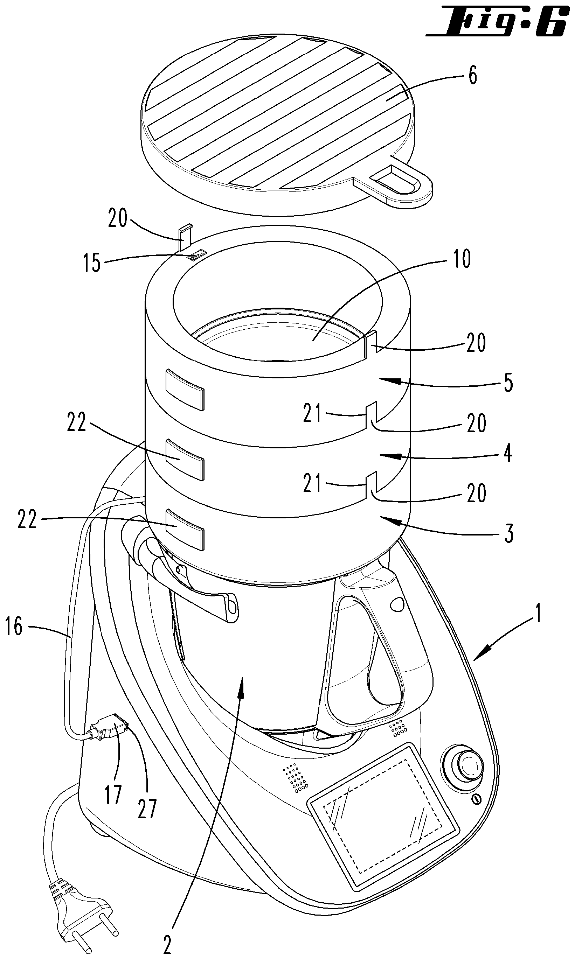

Sind, wie in der Figur 6 dargestellt, weitere Aufsatzbehälter 5 vorgesehen, so wiederholt sich der Schritt sinngemäß.

### Liste der Bezugszeichen

| | | | |
|---|---|---|---|
| 1 | Küchenmaschine | 27 | Einstecköffnung |
| 2 | Zubereitungsgefäß | | |
| 3 | Aufsatzbehälter | | |
| 4 | Aufsatzbehälter | | |
| 5 | Aufsatzbehälter | | |
| 6 | Deckel | | |
| 7 | obere Öffnung | | |
| 8 | obere Öffnung | | |
| 9 | Wand | | |
| 10 | Boden | | |
| 11 | Höhlung | | |
| 12 | Öffnung | | |
| 13 | Verschlussmittel | | |
| 14 | Schnittstellenelement | | |
| 15 | Schnittstellenelement | | |
| 16 | Kabel | | |
| 17 | Stecker | | |
| 18 | Rührwerk | | |
| 19 | Boden | | |
| 20 | Verbindungsmittel | | |
| 21 | Verbindungsmittel | | |
| 22 | Anzeigeelement | | |
| 23 | Zutat | | |
| 24 | Zutat | | |
| 25 | Antriebsmittel | | |
| 26 | Steuereinrichtung | | |

## Patentansprüche

1. Küchenmaschine (1) mit einem Zubereitungsgefäß (2), welches eine obere Öffnung (7) aufweist, und mit einer Mehrzahl von Aufsatzbehältern (3, 4, 5), die derart auf das Zubereitungsgefäß (2) aufgesetzt sind, dass eine bodenseitige Öffnung (12) der Aufsatzbehälter (3, 4, 5) über der oberen Öffnung (7) des Zubereitungsgefäßes (2) angeordnet ist, wobei der Aufsatzbehälter (3, 4, 5) in dem Aufsatzbehälter (3, 4, 5) selbst ausgebildete und relativ zu dem Aufsatzbehälter (3, 4, 5) im Übrigen bewegbare Verschlussmittel (13) aufweist, die in einer Geschlossenstellung die bodenseitige Öffnung (12) verschließen und zum Einfüllen von in dem Aufsatzbehälter (3, 4, 5) bevorrateten Zutaten (23, 24) in das Zubereitungsgefäß (2) in eine Offenstellung bringbar sind, wobei ein unterster Aufsatzbehälter (3) auf dem Zubereitungsgefäß (2) oder einem Deckel des Zubereitungsgefäßes (2) aufliegt und auf dem untersten Aufsatzbehälter (3) zumindest ein oberer Aufsatzbehälter (4, 5) angeordnet ist, **dadurch gekennzeichnet, dass** eine Oberseite des Aufsatzbehälters (3, 4, 5) ein erstes Schnittstellenelement (14) und eine Unterseite des Aufsatzbehälters (3, 4, 5) ein zweites Schnittstellenelement (15) aufweist, die derart ausgebildet und angeordnet sind, dass die beiden Schnittstellenelemente (14, 15) zweier übereinander angeordneter Aufsatzbehälter (3, 4, 5) miteinander verbunden sind, wobei über die miteinander gekoppelten Schnittstellenelemente (14, 15) Signale und/ oder elektrische Energie übertragbar sind.

2. Küchenmaschine (1) nach Anspruch 1, **dadurch gekennzeichnet, dass** die Verschlussmittel (13) elektromechanisch betätigbar sind zum automatisierten Einfüllen der Zutaten (23, 24), und/ oder, dass elektromechanische Antriebsmittel (25) vorgesehen sind, mit denen die Verschlussmittel (13) zwischen der Geschlossenstellung und der Offenstellung verlagerbar sind.

3. Küchenmaschine (1) nach Anspruch 2, **dadurch gekennzeichnet, dass** die elektromechanischen Antriebsmittel (25) mit einer Steuereinrichtung (26) der Küchenmaschine (1) über eine drahtgebundene oder drahtlose Signalübertragungsstrecke verbindbar sind.

4. Küchenmaschine (1) nach einem der vorhergehenden Ansprüche, **dadurch gekennzeichnet, dass** der Aufsatzbehälter (3, 4,5) eine obere Öffnung (8) aufweist, die von einem Deckel (6) oder einem weiteren Aufsatzbehälter (4, 5) verschließbar ist.

5. Küchenmaschine (1) nach einem der vorhergehenden Ansprüche, **dadurch gekennzeichnet, dass** der Aufsatzbehälter (3, 4, 5) mechanische Verbindungsmittel (20, 21) zur mechanischen Verbindung unmittelbar übereinander angeordneter Aufsatzbehälter (3, 4, 5) aufweist.

6. Küchenmaschine (1) nach einem der vorhergehenden Ansprüche, **dadurch gekennzeichnet, dass** eine insbesondere einen kreisförmigen Grundriss aufweisende Seitenwand des Aufsatzbehälters (3, 4,5) eine Höhlung (11) aufweist, insbesondere zur Aufnahme einer Temperiereinrichtung, bspw. einer Kühleinrichtung.

7. Küchenmaschine (1) nach einem der vorhergehenden Ansprüche, **dadurch gekennzeichnet, dass** der Aufsatzbehälter (3, 4, 5) ein Anzeigeelement (22) insbesondere zur optisch erfassbaren Darstellung eines Betriebszustandes, aufweist.

8. Küchenmaschine (3, 4, 5) nach einem der vorhergehenden Ansprüche, **gekennzeichnet durch** eine elektrische Zuleitung zur Energieübertragung und/oder Signalübertragung von der Küchenmaschine (1) zu einem Aufsatzbehälter (3, 4, 5).

9. Verfahren zum Betrieb einer Küchenmaschine (1) gemäß einem der Ansprüche 1 bis 8, **dadurch gekennzeichnet, dass** in zumindest einem oberhalb des Zubereitungsgefäßes (2) angeordneten Aufsatzbehälter (3, 4, 5) Zutaten (23, 24) bevorratet werden, wobei diese Zutaten zu einer vorgegebenen Zeit durch von einer Steuereinrichtung (26) veranlasstes Öffnen der Verschlussmittel (13) aus dem Aufsatzbehälter (3, 4, 5) in das Zubereitungsgefäß (2) fallen, wobei mehrere Aufsatzbehälter (3, 4, 5) übereinander angeordnet sind, die jeweils Zutaten (23, 24) bevorraten, wobei beginnend mit dem untersten Aufsatzbehälter (3) nacheinander in aufsteigender Reihenfolge die Verschlussmittel (13) geöffnet werden, so dass die Zutaten (23, 24) in das Zubereitungsgefäß (2) fallen, wobei die Zutaten (24) aus einem oberhalb eines unteren Aufsatzbehälters (3) angeordneten oberen Aufsatzbehälter (4, 5) durch den unteren Aufsatzbehälter (3) und dessen geöffnete bodenseitige Öffnung (12) hindurchfallen.

## Claims

1. Food processor (1) having a preparation vessel (2) which has an upper opening (7), and having a plurality of attachable containers (3, 4, 5) which are placed on the preparation vessel (2) in such a way that an opening (12) on the base side of the attachable containers (3, 4, 5) is arranged above the upper opening (7) of the preparation vessel (2), wherein the attachable container (3, 4, 5) has closure means (13) which are formed in the attachable container (3, 4, 5) itself and are otherwise movable relative to the attachable container (3, 4, 5), which closure means (13) close the base-side opening (12) in a closed position and can be brought into an open position for filling ingredients (23, 24) stored in the attachable container (3, 4, 5) into the preparation vessel (2), wherein a lowermost attachable container (3) rests on the preparation vessel (2) or a lid of the preparation vessel (2) and at least one upper attachable container (4, 5) is arranged on the lowermost attachable container (3), **characterised in that** an upper side of the attachable container (3, 4, 5) has a first interface element (14) and a lower side of the attachable container (3, 4, 5) has a second interface element (15), which are designed and arranged in such a way that the two interface elements (14, 15) of two attachable containers (3, 4, 5) arranged one above the other are connected to one another, wherein signals and/or electrical energy can be transmitted via the interface elements (14, 15) coupled to one another.

2. Food processor (1) according to claim 1, **characterised in that** the closure means (13) can be actuated electromechanically for the automated filling of the ingredients (23, 24), and/or **in that** electromechanical drive means (25) are provided, with which the closure means (13) can be displaced between the closed position and the open position.

3. Food processor (1) according to claim 2, **characterised in that** the electromechanical drive means (25) can be connected to a controller (26) of the food processor (1) via a hardwired or wireless signal transmission path.

4. Food processor (1) according to one of the preceding claims, **characterised in that** the attachable container (3, 4, 5) has an upper opening (8) which can be closed by a cover (6) or an additional attachable container (4, 5).

5. Food processor (1) according to one of the preceding claims, **characterised in that** the attachable container (3, 4, 5) has mechanical connecting means (20, 21) for mechanically connecting attachable containers (3, 4, 5) arranged one directly above the other.

6. Food processor (1) according to one of the preceding claims, **characterised in that** a side wall of the attachable container (3, 4, 5), which in particular has a circular ground plan, has a cavity (11), in particular for accommodating a temperature control device, for example a cooling device.

7. Food processor (1) according to one of the preceding claims, **characterised in that** the attachable container (3, 4, 5) has a display element (22), in particular for the optically recordable display of an operating state.

8. Food processor (3, 4, 5) according to one of the preceding claims, **characterised by** an electrical supply line for transmitting power and/or transmitting signals from the food processor (1) to a attachable container (3, 4, 5).

9. Method for operating a food processor (1) according to one of the claims 1 to 8, **characterised in that** ingredients (23, 24) are stored in at least one attachable container (3, 4, 5) arranged above the preparation vessel (2), wherein these ingredients fall from the attachable container (3, 4, 5) into the preparation vessel (2) at a predetermined time by opening of the closure means (13) initiated by a controller (26), wherein a plurality of attachable containers (3, 4, 5) are arranged one above the other, each of which stores ingredients (23, 24), wherein starting with the lowest attachable container (3), the closure means (13) are opened one after the other in ascending order so that the ingredients (23, 24) fall into the preparation vessel (2), the ingredients (24) fall out of an upper attachable container (4, 5) arranged above a lower attachable container (3) through the lower attachable container (3) and its open floor-side opening (12).

## Revendications

1. Robot ménager (1) avec un récipient de préparation (2) qui présente une ouverture supérieure (7), et avec une pluralité de récipients à poser (3, 4, 5) qui sont posés sur le récipient de préparation (2) de telle sorte qu'une ouverture (12) côté fond des récipients à poser (3, 4, 5) est disposée au-dessus de l'ouverture supérieure (7) du récipient de préparation (2), le récipient à poser (3, 4, 5) étant muni des moyens de fermeture (13) formés dans le récipient à poser (3, 4, 5) lui-même et mobiles par ailleurs par rapport au récipient à poser (3, 4, 5), qui ferment l'ouverture (12) côté fond dans une position fermée et peuvent être amenés dans une position ouverte pour remplir le récipient de préparation (2) d'ingrédients (23, 24) stockés dans le récipient à poser (3, 4, 5), un récipient supérieur le plus bas (3) reposant sur le récipient de préparation (2) ou sur un couvercle du récipient de préparation (2) et au moins un récipient supérieur (4, 5) étant disposé sur le récipient supérieur le plus bas (3), **caractérisé en ce qu'**une face supérieure du récipient supérieur (3, 4, 5) comporte un premier élément d'interface (14) et une face inférieure du récipient supérieur (3, 4, 5) comporte un deuxième élément d'interface (15) qui sont conçus et disposés de telle sorte que les deux éléments d'interface (14, 15) de deux récipients superposés (3, 4, 5) sont reliés entre eux, pouvant transmettre des signaux et/ou de l'énergie électrique par l'intermédiaire des éléments d'interface (14,15) couplés entre eux.

2. Robot ménager (1) selon la revendication 1, **caractérisé en ce que** les moyens de fermeture (13) peuvent être actionnés électromécaniquement pour le remplissage automatisé des ingrédients (23, 24), et/ou **en ce que** des moyens d'entraînement électromécaniques (25) sont prévus, avec lesquels les moyens de fermeture (13) peuvent être déplacés entre la position fermée et la position ouverte.

3. Robot ménager (1) selon la revendication 2, **caractérisé en ce que** les moyens d'entraînement électromécaniques (25) peuvent être reliés à un dispositif de commande (26) du robot ménager (1) par l'intermédiaire d'une liaison de transmission de signaux filaire ou sans fil.

4. Robot ménager (1) selon l'une des revendications précédentes, **caractérisé en ce que** le récipient à poser (3, 4, 5) présente une ouverture supérieure (8) qui peut être fermée par un couvercle (6) ou un autre récipient à poser (4, 5).

5. Robot ménager (1) selon l'une des revendications précédentes, **caractérisé en ce que** le récipient rapporté (3, 4, 5) présente des moyens de liaison mécanique (20, 21) pour relier mécaniquement des récipients rapportés (3, 4, 5) disposés directement les uns au-dessus des autres.

6. Robot ménager (1) selon l'une des revendications précédentes, **caractérisé en ce qu'**une paroi latérale du récipient supérieur (3, 4, 5), présentant en particulier un plan circulaire, présente une cavité (11), en particulier pour recevoir un dispositif de régulation de température, par exemple un dispositif de refroidissement.

7. Robot ménager (1) selon l'une des revendications précédentes, **caractérisé en ce que** le récipient à poser (3, 4, 5) présente un élément d'affichage (22), en particulier pour la représentation optiquement détectable d'un état de fonctionnement.

8. Robot ménager (3, 4, 5) selon l'une des revendications précédentes, **caractérisé par** une ligne d'alimentation électrique pour la transmission d'énergie et/ou la transmission de signaux du robot ménager (1) à un récipient rapporté (3, 4, 5).

9. Procédé de fonctionnement d'un robot ménager (1) selon l'une des revendications 1 à 8, **caractérisé en ce que** des ingrédients (23, 24) sont stockés dans au moins un récipient supérieur (3, 4, 5) disposé au-dessus du récipient de préparation (2), ces ingrédients tombant du récipient supérieur (3, 4, 5) dans le récipient de préparation (2) à un moment prédéterminé par l'ouverture des moyens de fermeture (13) provoquée par un dispositif de commande (26), plusieurs récipients supérieurs (3, 4, 5) sont disposés les uns au-dessus des autres et stockent chacun des ingrédients (23, 24), les moyens de fermeture (13) étant ouverts successivement dans l'ordre croissant en commençant par le récipient supérieur (3) le plus bas, de sorte que les ingrédients (23, 24) tombent dans le récipient de préparation (2), les ingrédients (24) tombant d'un récipient supérieur (4, 5) disposé au-dessus d'un récipient supérieur (3) à travers le récipient inférieur (3) et son ouverture (12) ouverte du côté du fond.
